Europäisches Patentamt

European Patent Office

Office européen des brevets

(19)

(11) Veröffentlichungsnummer: **0 188 748**
**B1**

(12) # EUROPÄISCHE PATENTSCHRIFT

(45) Veröffentlichungstag der Patentschrift:
03.05.89

(21) Anmeldenummer: 85115996.2

(22) Anmeldetag: 14.12.85

(51) Int. Cl.⁴: **G08B 13/18**

(54) **Raumschutzanlage.**

(30) Priorität: 22.12.84 DE 3447131

(43) Veröffentlichungstag der Anmeldung:
30.07.86 Patentblatt 86/31

(45) Bekanntmachung des Hinweises auf die Patenterteilung:
03.05.89 Patentblatt 89/18

(84) Benannte Vertragsstaaten:
AT CH DE FR GB LI NL

(56) Entgegenhaltungen:
DE-A- 2 526 171
DE-A- 2 719 191
DE-A- 2 904 654
DE-B- 2 653 111
DE-B- 2 734 157
US-A- 3 444 544
US-A- 4 479 053

(73) Patentinhaber: Telenot Electronic GmbH,
Postfach 1827 Wiesentalstrasse 42-44,
D-7080 Aalen-Hammerstadt(DE)

(72) Erfinder: Haag, Günter, Dr. rer. nat. Dipl.-Phys.,
Hessenlauweg 10 B, D-7000 Stuttgart 80(DE)

ACTORUM AG

**Beschreibung**

Die Erfindung betrifft eine Raumschutzanlage gemäß dem Oberbegriff des Anspruchs 1.

Bekannt sind auf verschiedenen physikalischen Methoden beruhende Raumabsicherungen. So ist es nach DE-B 2 653 111 bekannt, die Anwesenheit eines Objektes z.B. einer unbefugten Person oder eines Einbrechers, in einem geschützten Raum oder Bereich durch die von diesem Objekt ausgehende Infrarotstrahlung (Körperstrahlung) mittels geeigneter Detektoren und Reflektorflächen nachzuweisen, welche die aus verschiedenen getrennten Empfangsbereichen eintreffende Strahlung auf einen gemeinsamen Strahlungsempfänger fokussiert.

Vorteilhaft bei diesem Verfahren ist die sehr geringe mittlere Stromaufnahme, nachteilig ist der mangelhafte Sicherheitsfaktor dieses Systems und die Fehlalarmhäufigkeit, welche auch durch die Verwendung mehrerer Reflektorflächen, welche die aus verschiedenen getrennten Empfangsbereichen eintreffende Strahlung auf einen gemeinsamen Strahlungsempfänger fokussieren, prinzipiell nicht beseitigt werden kann. Diese Nachteile werden bedingt durch das zugrunde liegende physikalische Prinzip und die Eigenschaften von elektromagnetischer Strahlung in einem Bereich zwischen 10–30 μm.

Bekannt ist ferner nach DE-B 3 032 510 eine Raumschutzanlage, mit einer Lichtquelle als Energiestrahler und einem optoelektronischen Empfänger als Energieempfänger, wobei die Lichtquelle ultraviolettes Licht ausstrahlt und die auf den Empfänger treffende Energie durch in den zu schützenden und überwachenden Raum eindringende oder sich bewegende Personen oder Gegenstände, verändert wird und mit einer Auswerteschaltung, dadurch gekennzeichnet, daß die Lichtquelle UV-Strahlung im Raum diffus verteilt und der optoelektronische Empfänger von der Lichtquelle abgeschattet ist, daß die UV-Strahlung pulsmoduliert ausgestrahlt wird und daß eine weitere elektronische Empfangseinrichtung, die modulierte UV-Strahlung empfängt und aus dem Pulscode eine Gefahrenmeldung oder eine Betriebsstörung erkennt und zur Alarmauslösung weiterleitet.

Diese Methode der Absicherung hat jedoch außer den gesundheitsschädigenden Wirkungen von UV-Strahlung den Nachteil, eines nicht zu vermeidenden relativ hohen Stromverbrauchs. Da die Lichtquelle UV-Strahlung diffus im Raum verteilt, bewirkt eine von außen sich dem zu schützenden Bereich nähernde Person eine stetige Änderung des Signals am Empfänger. Die zuverlässige Erkennung eines Alarms sowie die Unterscheidung bezüglich Alarm und Störung ist daher nicht mit ausreichender Sicherheit gegeben, so daß auch aufgrund der Fehlalarmhäufigkeit ein unbedenklicher Einsatz dieser Raumschutzanlage nicht gewährleistet ist.

In US-PS 4 479 053 wird ein optischer Näherungssensor beschrieben, bei welchem die Schwierigkeit der Justierung von Paaren von Sende- und Empfangselementen durch Anordnung dieser Elemente in der Fokusebene entsprechender Linsen gelöst wird.

Dieser Näherungssensor ist jedoch nicht als Melder zur Raumüberwachung geeignet, da dessen unzulänglicher Sicherheitsfaktor sowie dessen Fehlalarmanfälligkeit nicht akzeptiert werden kann.

In US-PS 3 444 544 wird ein optischer Näherungssensor beschrieben, der aus einer Vielzahl von Lichtsendern und Lichtempfängern aufgebaut ist. Die von den Lichtsendern ausgesandte Lichtenergie füllt den zu überwachenden Raum vollständig aus. Intensitätsveränderungen, die durch ein Objekt, welches sich durch den Raum bewegt hervorgerufen werden, führen zu einem Alarmsignal.

Derartig aufgebaute Sensoren sind jedoch einerseits zu unempfindlich, da eine geringe Änderung des diffusen Streuanteils im Vergleich zur empfangenen Gesamtstreustrahlung ausgewertet werden muß, andererseits zu störanfällig aufgrund des Auswerteprinzips.

Angewandt und vorgeschlagen sind weiterhin Methoden mit Hilfe von Ultraschall unter Ausnützung des Dopplereffektes Räume abzusichern. Da das sich ausbildende Dopplersignal jedoch von der Relativgeschwindigkeit der eindringenden Person gegenüber der Umgebungsluft abhängt und sich die Art der Luftzirkulation im Raum sowie das Geschwindigkeitsfeld sehr stark ändern kann, in Abhängigkeit von den Randbedingungen wie Temperatur, dem Zustand der Fenster und Türen – geschlossen oder offen – sind diese Anlagen äußerst störanfällig.

Der Erfindung liegt die Aufgabe zugrunde, unter Beseitigung der eingangs erwähnten Nachteile, bei gleichzeitiger Sicherstellung des Vorteils eines äußerst geringen Stromverbrauchs, eine Raumschutzanlage zu schaffen, deren Fehlalarm-Anfälligkeit erheblich verbessert ist und die insbesondere einen größeren Sicherheitsfaktor gegenüber den bestehenden passiven Systemen besitzt.

Diese Aufgabe wird durch die im Anspruch 1 gekennzeichneten Merkmale dadurch gelöst, daß ein oder mehrere Sendeelemente geeignet moduliertes oder kodiertes Licht in bestimmte Bereiche oder Sektoren aussenden, wobei diese Bereiche oder Sektoren durch besonders gestaltete optische Bauelemente, wie etwa Linsen und/oder durch die Verwendung von ein oder mehreren sphärischen oder asphärischen Reflektoren und/oder durch eine spezielle Ausrichtung der Sendeelemente bei geeigneter Wahl der Abstrahlungscharakteristik der Sendeelemente und/oder durch das zusätzliche Aufbringen von absorbierenden Schichten auf das sich vor den Sendeelementen und Empfangselementen befindliche Infrarot-Filter oder durch das Anbringen einer speziellen Loch- oder Schlitzmaske entstehen und daß sich zwischen den erwähnten Bereichen oder Sektoren Zonen befinden, die nicht direkt durch die von den Sendeelementen ausgesandte Strahlung beleuchtet werden und daß ein oder mehrere Empfangselemente selektiv die einfallende Strahlung empfangen und Veränderungen des durch die Sendeelemente im Raum erzeugten Strahlungsfeldes bezüglich Intensität und/oder Änderungsgeschwindigkeit der Intensität und/oder Phase in einer nachgeschalteten Auswertelogik ausgewertet wird und insbesondere beim Erreichen bestimmter Schwellwerte eine Alarmauslösung erfolgt.

Ausgestaltungen der Erfindung sind den Unteransprüchen zu entnehmen.

Als Sendeelemente eignen sich im infraroten lichtemittierende Dioden, GaALA.-IRED's, wie sie z.B. die Firma TRW, 1207 Tappan Cude, Carrollton, herstellt. Diese zeichnen sich durch eine sehr gute Quantenausbeute und eine hohe Lebensdauer aus. Um zu erzielen, daß nur bestimmte Bereiche oder Sektoren durch die Sendeelemente beleuchtet werden, sind verschiedene optische Verfahren einsetzbar. Denkbar sind aus einzelnen Segmenten aufgebaute Reflektoren, wobei jeweils die spezielle Formgebung eines Segments für die räumliche Gestalt eines bestimmten beleuchteten Bereichs oder Sektors ausschlaggebend ist. Je nach der gewünschten Struktur der Bereichsaufteilung des zu schützenden Raumes – in Bereiche oder Sektoren, die durch die Sendeelemente beleuchtet werden und in nichtbeleuchtete Zonen – ergibt sich die optimale Formgebung der einzelnen Segmente. In vielen Anwendungsfällen erfüllen einfache geometrische Flächen, wie etwa Zylinderflächen, ebene Spiegel oder Rotationsellipsoidflächen, die gestellte Aufgabe. Eine weitere Gestaltungsmöglichkeit der zu beleuchtenden Bereiche oder Sektoren ist durch das Aufbringen von infrarot absorbierenden Schichten auf geeignet ausgebildete Reflektoren gegeben.

Es besteht jedoch auch die Möglichkeit, Sendeelemente mit einer geeigneten Abstrahlungscharakteristik zu verwenden, wie etwa einen möglichst großen Abstrahlungswinkel in der einen Ebene und einen möglichst kleinen Abstrahlungswinkel in der dazu senkrechten Ebene. Durch ein zusätzliches Aufbringen von Infrarotstrahlung absorbierenden Schichten auf das sich vor den Sendeelementen und Empfangselementen befindliche Infrarotfilter, können die erwähnten Bereiche oder Sektoren noch genauer in ihrer geometrischen Gestalt festgelegt werden.

Verwendet man elektromagnetische Strahlung mit einer Wellenlänge von 800 nm–1 µm, so können Beugungseffekte, bei den hier gestellten Anforderungen, vollständig vernachlässigt werden, im Gegensatz zur Verwendung von Körperstrahlung mit Wellenlängen größer 10 µm. Dies ermöglicht es auch einfache optische Linsensysteme als strukturbildende Elemente der einzelnen Bereiche oder Sektoren einzusetzen.

Durch ein Infrarotfilter wird sichergestellt, daß Tageslicht oder auch direkte Sonneneinstrahlung die Empfänger nicht in ihrer Funktion stören und auch die Raumschutzanlage nicht von außen einsichtig ist.

Für die mit Körperstrahlung arbeitenden Infrarotmelder (passiv Infrarot) kommt vor allem die Sonnenstrahlung als mögliche Störquelle in Betracht. Ihre Intensität ist im Bereich zwischen 5–30 µm so groß, daß sie auch über reflektierende Flächen Fehlalarm auslösen kann.

Erfindungsgemäß wird dieses Problem dadurch umgangen, daß Lichtimpulse mit einer bestimmten Trägerfrequenz oder Kodierung über ein oder mehrere Sendeelemente ausgestrahlt werden und in der den Empfangselementen nachgeschalteten Auswertelogik nur Signale bzw. Signaländerungen zur weiteren Auswertung gelangen, die die entsprechende Trägerfrequenz oder Kodierung besitzen.

Damit fällt die wesentlichste Fehlalarmquelle bisheriger (passiv Infrarot-) Raumschutzanlagen weg.

Um eine Fehlalarmauslösung durch sich im Strahlengang befindliche Insekten zu verhindern, sind erfindungsgemäß mindestens zwei Sendeelemente und Empfangselemente vorgesehen. Eine Möglichkeit der Auswertung besteht nun darin, daß die Sendeelemente nacheinander, d.h. wechselseitig Lichtimpulse aussenden, mit jeweils gleichartig moduliertem Licht und daß die Empfangselemente ebenfalls wechselseitig bestimmten Sendeelementen zugeordnet werden. In diesem Falle ist es auch denkbar und möglich durch die Verwendung von Analogschaltern die Empfangselemente wechselseitig an einen gemeinsamen Auswertekanal zu legen und die entsprechenden Signale nach den üblichen elektronischen Methoden der Signalaufbereitung miteinander und/oder mit vorgegebenen Schwellwerten zu vergleichen. Hierdurch wird auch der elektronische Schaltungsaufwand erheblich verringert. Damit es zur Auslösung eines Alarms kommt, müssen in diesem Falle an beiden Empfangselementen unzulässige Pegeländerungen auftreten. Selbstverständlich ist es auch denkbar und möglich mehr als zwei Sendeelemente und Empfangselemente vorzusehen und diese gruppenweise oder auch einzeln anzusteuern.

Um den Stromverbrauch möglichst gering zu halten, ist es zweckmäßig die Pulsdauer der Lichtimpulse wesentlich kleiner zu wählen als die Wiederholzeit der Lichtimpulse. Auch sollte die Schwingungsdauer der Modulation klein gewählt werden gegenüber der Pulsdauer der Lichtimpulse um ein günstiges Signal/Rausch-Verhältnis zu bekommen.

Eine andere Möglichkeit lokale Störquellen zu eliminieren besteht z.B. darin, daß mindestens zwei Sendeelemente und zwei Empfangselemente vorgesehen sind und daß die Sendeelemente Lichtimpulse aussenden, mit jeweils verschieden moduliertem Licht und daß die Empfangselemente in ihrer nachgeschalteten Auswerteelektronik selektiv auf die Modulation bestimmter Sendeelemente ansprechen und daß in der nachgeschalteten Auswertelogik mindestens zwei Sende- und/oder Empfangselemente gleichzeitig beeinflußt werden müssen um Alarm auszulösen.

Selbstverständlich ist es auch denkbar und möglich, die Sendeelemente und die Empfangselemente wechselseitig auszutauschen, d.h. den Strahlengang umzukehren. Die sich hieraus ergebenden Schlußfolgerungen sind physikalisch einfach ableitbar und sollen daher nicht im einzelnen aufgeführt werden.

In dieser Beschreibung ist stets von Licht die Rede. Der Ausdruck Licht ist in diesem Zusammenhang als Sammelbegriff für elektromagnetische Strahlung zu verstehen, d.h. für die beschriebene Raumschutzanlage kann elektromagnetische Strahlung beliebiger, dem jeweiligen Problem angepaßter Wellenlänge Verwendung finden.

Die erfindungsgemäße Raumschutzanlage soll nun anhand der Figuren 1 bis 9 der beigefügten Zeichnungen in ihrer Funktion und in ihrem Aufbau näher erläutert werden. Dabei zeigen im einzelnen:

Fig. 1 eine Prinzipskizze der Wirkungsweise der Raumschutzanlage;

Fig. 2 einen möglichen zeitlichen Signalverlauf an einem Empfangselement;

Fig. 3 ein einfaches Ausführungsbeispiel der Raumschutzanlage;

Fig. 4 ein Ausführungsbeispiel der Raumschutzanlage mit elektronischer Elimination lokaler Störungen;

Fig. 5 ein weiteres Ausführungsbeispiel der Raumschutzanlage, wobei die Sendeelemente in Richtung der zu beleuchtenden Bereiche oder Sektoren abstrahlen;

Fig. 6–8 mögliche Reflektoranordnungen zur Realisierung der gewünschten Aufteilung in Bereiche oder Sektoren;

Fig. 9 eine mögliche Bereichs- oder Sektoraufteilung mittels einer Linse.

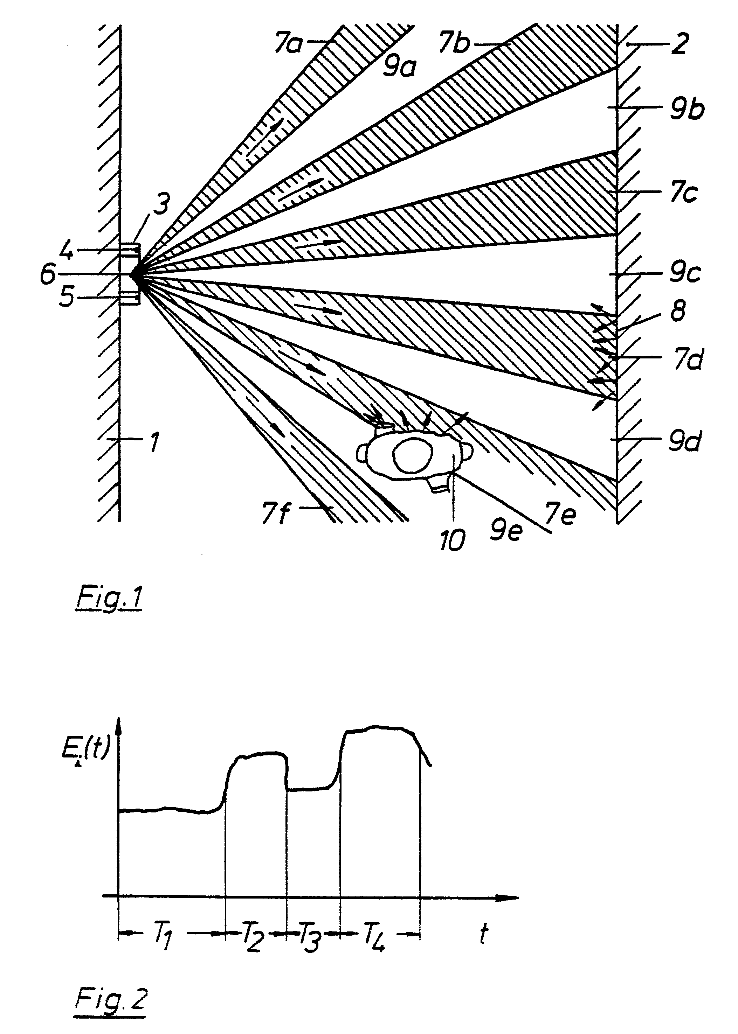

In Fig. 1 ist eine Prinzipskizze zur Veranschaulichung der Wirkungsweise der Raumschutzanlage dargestellt. Die aus den Empfangselementen 4, 5 und den Sendeelementen 6 aufgebaute Raumschutzanlage 3 ist an einer Wand 1 befestigt. Die Sendeelemente 6 strahlen hier beispielsweise geeignet modulierte Lichtimpulse in die Bereiche oder Sektoren 7a–7f. Zwischen diesen aktiv beleuchteten Bereichen oder Sektoren befinden sich Zonen 9a–9e, die nicht direkt durch die von den Sendeelementen 6 ausgesandte Strahlung beleuchtet werden. Treffen nun die Lichtimpulse auf sich im Raum befindliche Gegenstände oder die umgebenden Wände 2 auf, so findet eine teilweise Absorption der Strahlung und eine mehr oder minder starke diffuse Streuung 8 statt. Dieses Streulicht wird von den Empfangselementen 4, 5 empfangen und in einer nachgeschalteten Auswertelogik ausgewertet.

Dabei werden nur diejenigen Anteile des elektromagnetischen Strahlungsfeldes ausgewertet, deren Schwingung mit der Modulation oder Kodierung der ausgesandten Lichtimpulse übereinstimmt. Dringt nun eine unbefugte Person von außen in den zu überwachenden Raum ein und durchquert die beleuchteten Bereiche oder Sektoren 7a–7f, so findet am Körper der Person ebenfalls eine diffuse Streuung der ausgesandten Lichtimpulse statt. Die an den Empfangselementen 4, 5 sich hierdurch zeigen- de Veränderung des elektromagnetischen Strah- lungsfeldes wird in der nachgeschalteten Auswerte- logik bezüglich Intensität, Änderungsgeschwindig- keit der Intensität und/oder Phase ausgewertet. Beim Erreichen bestimmter Schwellwerte erfolgt eine Alarmauslösung.

In Fig. 2 ist beispielhaft ein möglicher zeitlicher Verlauf des empfangenen Strahlungsfeldes $E_i(t)$ aufgezeigt. Wie angedeutet hat die erfindungsgemäße Aufteilung des Raumes in beleuchtete Bereiche oder Sektoren 7a–7f und unbeleuchtete Zonen 9a–9e den Vorteil, daß die unbefugte Person beim Durchqueren des Raumes schnelle Signaländerungen an den Empfangselementen 4, 5 bewirkt. Wäh- rend der Zeit $T_1$ wird in dem durch die Empfangselemente erfaßten Raumbereich keine Veränderung des Strahlungsfeldes festgestellt. Es ist hier ange- nommen, daß im Zeitintervall $T_2$ eine unbefugte Per- son in einen beleuchteten Bereich oder Sektor eindringt und damit eine Veränderung des Strahlungsfeldes hervorruft. Während des Zeitintervalls $T_3$ durchquert die unbefugte Person eine nicht direkt beleuchtete Zone und gelangt während $T_4$ wieder in einen beleuchteten Bereich oder Sektor. Als Alarm- kriterium kann die Intensität $E_i(t)$ des empfangenen modulierten Strahlungsfeldes dienen, wobei eine Alarmanzeige erfolgt, falls bestimmte Schwellwerte der Intensität über- bzw. unterschritten werden. Die erfindungsgemäße sektorale Beleuchtung des zu überwachenden Raumes ermöglicht es jedoch auch, die Änderungsgeschwindigkeit der Intensität des empfangenen, modulierten Strahlungsfeldes $de_i/dt$ zur Auswertung zu verwenden, wobei eine Alarmauslösung dann erfolgt, wenn die Änderungs- geschwindigkeit der Intensität des Strahlungsfel- des einen gewissen Schwellwert überschreitet. Auch die Auswertung von Phasendifferenzen des Strahlungsfeldes kann als Alarmkriterium dienen, dies soll hier jedoch nicht im einzelnen aufgezeigt werden.

Wie erwähnt, wird der Raum entsprechend Fig. 1 in aktiv beleuchtete Bereiche oder Sektoren 7a–7f unterteilt und in Zonen 9a–9e, die nicht direkt durch die von den Sendeelementen 6 ausgesandte Strahlung beleuchtet werden. Die einzelnen aktiv beleuchteten Bereiche oder Sektoren 7a–7f werden zweckmäßigerweise nacheinander, d.h. im Multiplex- Betrieb angesteuert und die Streustrahlung jedes einzelnen Bereichs für sich bezüglich der verschiedenen Alarm- und Störungskriterien ausgewertet. Hierdurch wird sichergestellt, daß intensive Streustrahlung von sich in der Nähe befindlichen Gegenständen nicht die relativ schwachen Feldänderungen überdeckt, wie sie z.B. durch einen Eindringling hervorgerufen werden, der in größerem Abstand den Raum durchquert.

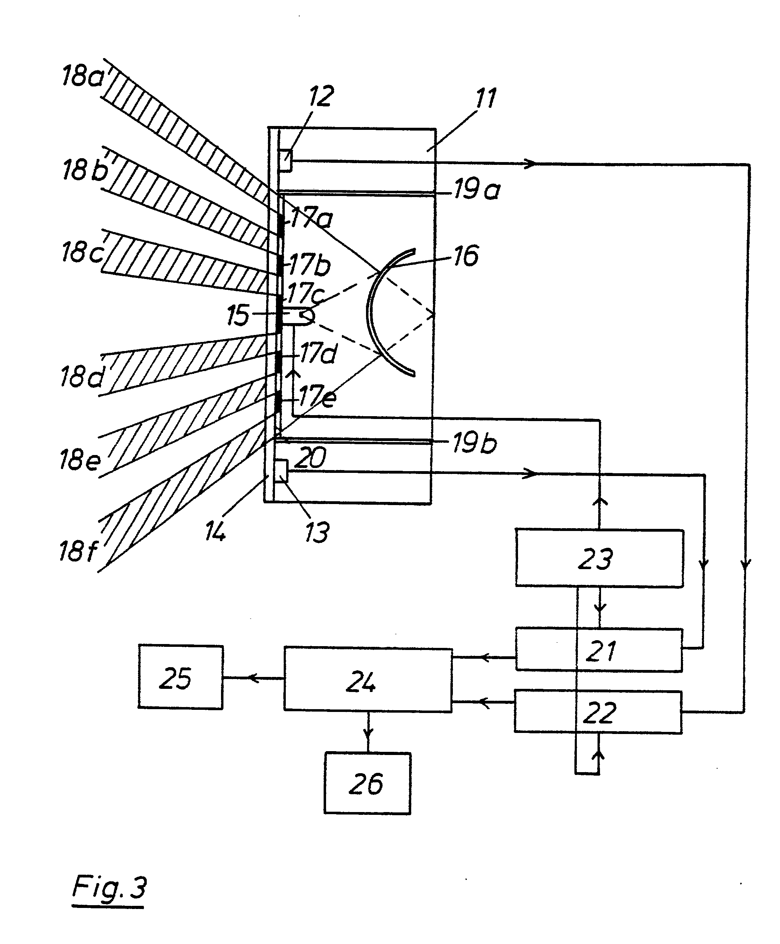

In Fig. 3 ist mit 11 das Gehäuse der Raumschutzanlage bezeichnet, in welchem sich im dargestellten Ausführungsbeispiel ein Sendeelement 15, z.B. eine infrarot emittierende Leuchtdiode, IRED sowie zwei Empfangselemente 12, 13 befinden. Vor dem Sendeelement 15 und den Empfangselementen 12, 13 ist ein Infrarotfilter 14 vorgesehen, das eine möglichst hohe Transmission im Wellenlängenbereich der Empfangs- und Sendeelemente besitzt und eine möglichst große Absorption im übrigen Spektralbereich. Das Infrarotfilter 14 verhindert ebenfalls das Einsehen der Raumschutzanlage durch eine unbefugte Person von außen. Erwärmungen des Infrarotfilters können hier nicht zur Auslösung von Fehlalarm führen, im Gegensatz zu passiv Infrarot-Raumschutzanlagen. Das Sendeelement 15 besitzt eine Abstrahlungscharakteristik, die auf den Reflektor 16 abgestimmt ist. Der Reflektor 16 besteht hier beispielhaft aus einem reflektierend ausgebildeten Kugelsegment. Über den Reflektor 16 wird die Infrarotstrahlung in den zu schützenden Raum gestrahlt, wobei durch eine Loch oder Schlitzmaske 20 mit Stegen 17a–17e, die die Infrarotstrahlung absorbieren, die Aufteilung des Raumes in beleuchtete Bereiche oder Sektoren 18a–18f und unbeleuchtete Zonen hervorgerufen wird. Die Trennwände 19a, 19b verhindern die direkte Einkopplung der ausgesandten Infrarotstrahlung durch die Empfangselemente 12, 13. Die Aufbereitung der über das Sendeelement 15 ausgesandten Lichtimpulse erfolgt über einen Modulator 23. Der Modulator 23 bestimmt nicht nur das Tastverhältnis der Lichtimpulse und deren Einhüllende sondern auch die gewählte Modulationsfrequenz der Lichtimpulse und/oder deren Kodierung. Die Empfangselemente 12, 13 registrieren den vom Infrarotfilter 14 durchgelassenen Anteil des elektromagnetischen Strahlungsfeldes. Jedem Empfangselement 12, 13 ist jeweils ein Auswertekanal 21, 22 nachgeschaltet.

Es ist auch denkbar und möglich, anstelle mehrerer Auswertekanäle nur einen einzigen Auswertekanal zu verwenden und über Analogschalter, in einer bestimmten Taktfrequenz, welche synchron zur Pulsfrequenz ist, die einzelnen Empfangselemente nacheinander zuzuordnen.

Die einzelnen Auswertekanäle 21, 22 verstärken nur diejenigen Anteile des empfangenen elektromagnetischen Strahlungsfeldes, welche in ihrer Modulation und/oder Kodierung und/oder Pulsfrequenz mit dem über das Sendeelement 15 ausgesandten Lichtimpuls übereinstimmen. Die Ausgangssignale der Auswertekanäle 21, 22 gelangen zur Auswertelogik 24, welche im wesentlichen als UND-Glied ausgebildet ist. Stellt die Auswertelogik an beiden Auswertekanälen 21, 22 ein unzulässiges Störsignal fest, so löst sie über die Einrichtung 25 Alarm aus.

Bei der dargestellten Raumschutzanlage können sowohl Alterungsprozesse der Bauelemente als auch eine langsam eintretende Verschmutzung der optischen Bauteile in einem weiten Bereich kompensiert werden, ohne daß die Funktionsfähigkeit der Raumschutzanlage gestört ist. Haben diese Alterungs- und Verschmutzungsprozesse jedoch eine Abschwächung der Signale von den Empfangselementen 12, 13 bewirkt, welche über eine bestimmte in der Auswertelogik 24 eingestellte Toleranzschwelle hinausgehen, so erfolgt die Meldung einer Störung über die Einrichtung 26.

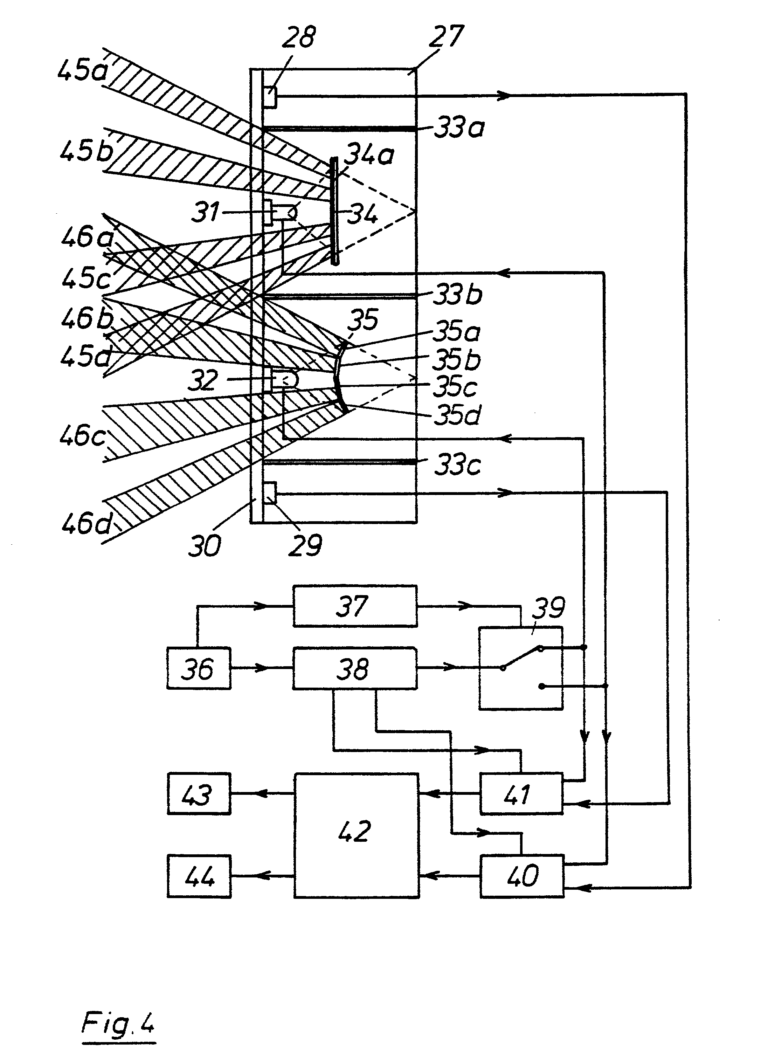

In Fig. 4 ist eine weitere erfindungsgemäße Ausgestaltung der Raumschutzanlage dargestellt, welche sich durch eine besonders gute Fehlalarmsicherheit auszeichnet. Im Gehäuse 27 befinden sich hinter dem gemeinsamen Infrarotfilter 30, jeweils zwei Sendeelemente 31, 32 und zwei Empfangselemente 28, 29.

Eine optische Trennung der Sende- und Empfangselemente erfolgt durch die Trennwände 33a–33c. Die Trennwand 33b kann gegebenenfalls auch entfallen. Die von den Sendeelementen 31, 32 ausgesandten Lichtimpulse werden über die Reflektoren 34, 35 in den zu schützenden Raum abgestrahlt.

Zur Veranschaulichung der Vielzahl möglicher Reflektorausgestaltungen, welche eine Aufteilung des zu schützenden Raumes ermöglichen, in von den Sendeelementen 31, 32 beleuchtete Bereiche oder Sektoren 45a–45d und 46a–46d und unbeleuchtete Zonen, wurden hier beispielsweise für die Reflektoren 34 und 35 verschiedene geometrische Formen eingezeichnet.

Der mit 34 bezeichnete Reflektor ist hier als ebener Spiegel ausgebildet und mit einer Loch- oder Schlitzmaske versehen 34a oder mit absorbierenden Schichten, welche die gewünschte Bereichs- oder Sektoraufteilung bewirken. Der Reflektor 35 ist beispielhaft aus mehreren einzelnen Reflektorsegmenten, hier 35a–35d, aufgebaut. Die einzelnen Reflektorsegmente 35a–35d bilden den Strahlungskegel des Sendeelements 32 auf die einzelnen Bereiche oder Sektoren 46a–46d ab.

Die Lichtimpulse werden über einen Taktgenerator 36 und einen Modulator 38 wie gewünscht aufbereitet. Mittels eines Zählers 37 und eines Wechselschalters 39 werden die Sendeelemente 31, 32 wechselseitig durch einzelne Lichtimpulse oder auch Pulsgruppen angesteuert. Dem Sendeelement 31 ist hier beispielhaft das Empfangselement 29 zugeordnet, dem Sendeelement 32, das Empfangselement 28. Eine Fehlalarmauslösung durch lokale Störungen, wie z.B. durch Insekten, wird nun erfindungsgemäß durch die Forderung weitgehend eliminiert, daß an beiden Empfangselementen 28, 29 eine unzulässige Veränderung des elektromagnetischen Strahlungsfeldes beobachtet wird. Die Bewertung des zugrunde gelegten Alarmkriteriums geschieht in der Auswertelogik 42, welche die Eingangsinformationen über die, den Empfangselementen 28, 29 nachgeschalteten Auswertekanäle 40, 41 erhält. Wieder wird bezüglich Alarm 43 und Störung 44 unterschieden.

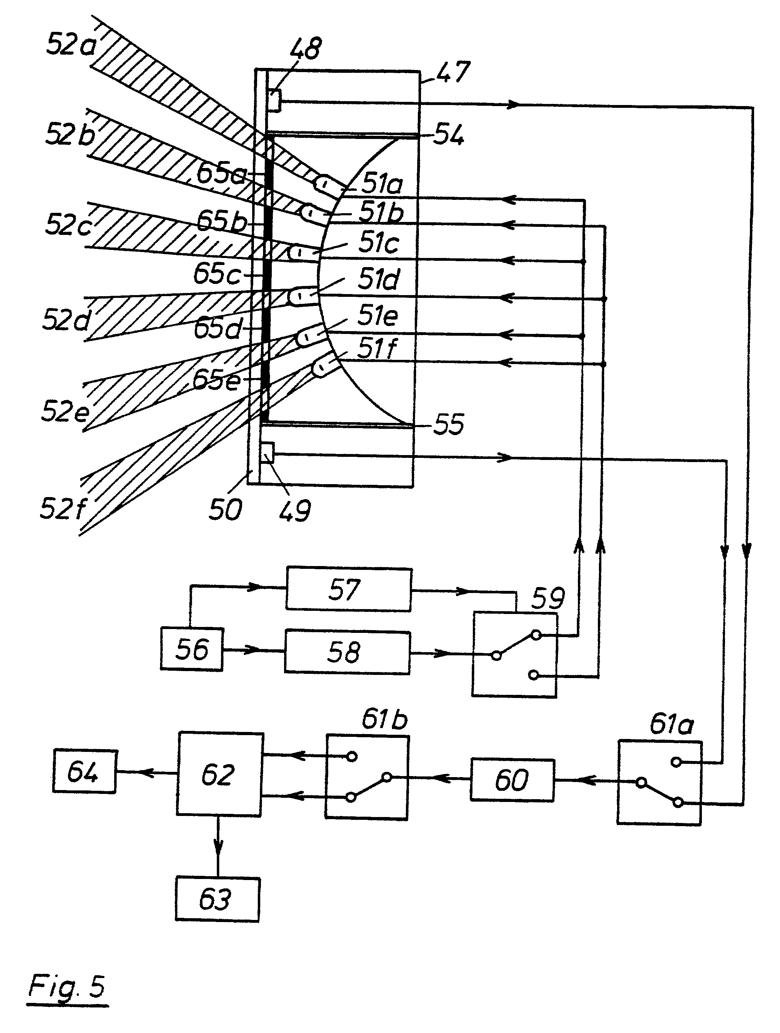

In Fig. 5 befinden sich im Gehäuse 47 außer den beiden Empfangselementen 48, 49 mehrere Sendeelemente 51a–51f. Das Infrarotfilter ist mit 50 bezeichnet, die Trennwände mit 54, 55. Die Einteilung des zu schützenden Raumes in die gewünschten Bereiche oder Sektoren 52a–52f, in welche Lichtimpulse ausgesandt werden, geschieht hier durch eine spezielle Ausrichtung der Sendeelemente 51a–51f, durch die Wahl einer geeigneten Abstrahlungscharakteristik der Sendeelemente und durch das Aufbringen geeigneter absorbierender Schichten 65a–65e auf das Infrarotfilter 50 oder das Anbringen einer geeigneten Loch- oder Schlitzmaske zwischen Infrarotfilter 50 und den Sendeelementen 51a–51f. Um auch bei dieser erfindungsgemäßen Ausgestaltung den Einfluß lokaler Störungen zu eliminieren, werden die einzelnen Sendeelemente in Gruppen zusammengefaßt und die einzelnen Gruppen jeweils gemeinsam angesteuert. In Fig. 5 gehören die Sendeelemente 51a, 51c, 51e und 51b, 51d, 51f jeweils zu einer Gruppe. Selbstverständlich ist auch eine andere Anzahl von Sendeelementen als auch eine andere Gruppeneinteilung, insbesondere in mehr als zwei Gruppen, denkbar und möglich.

Die Aufbereitung der Sendeimpulse geschieht wiederum mittels eines Taktgebers 56, Zählers 57 und Modulators 58. Die einzelnen Gruppen von Sendeelementen werden z.B. über einen Analogschalter 59 angesteuert. Mit Hilfe der beiden Analogschalter 61a und 61b ist es möglich, die Signale der Empfangselemente 48, 49 über einen einzigen Auswertekanal 60 auszuwerten und in der nachgeschalteten Auswertelogik 62 bezüglich Alarm 64 und Störung 63 zu unterscheiden.

In der Auswertelogik 62 findet ein dynamischer Vergleich der empfangenen Streuintensitäten für jede einzelne Gruppe von Sendeelementen getrennt statt. Eine unzulässige Verringerung oder Vergrößerung der Streuintensitäten wird für ein bestimmtes Zeitintervall digital abgespeichert. Langsame Verschmutzungseffekte werden dadurch ebenfalls einfach kompensiert.

Um die Funktionssicherheit der Raumschutzanlage zu erhöhen, ist es zweckmäßig als Alarmkriterium zu fordern, daß in mindestens zwei benachbarten Bereichen oder Sektoren unzulässige Feldänderungen festgestellt werden. Es sollten daher mindestens zwei sich zeitlich überlappende Logik-Signale anstehen.

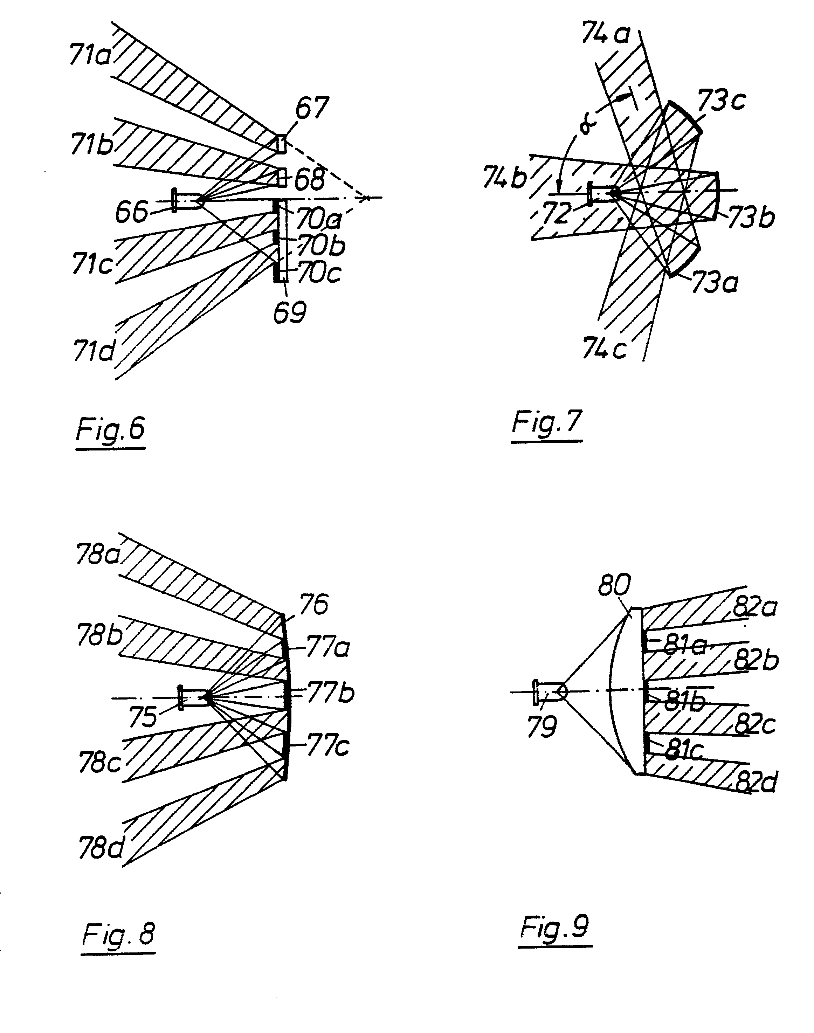

In den Figuren 6–9, werden weitere Möglichkeiten aufgezeigt, die gewünschte Aufteilung des zu schützenden Raumes in Bereiche oder Sektoren zu erhalten, die durch die Sendeelemente beleuchtet werden.

Selbstverständlich sind auch andere Reflektor- und/oder Abbildungsoptiken denkbar und möglich. Diese sollen jedoch dem Stand der Technik gemäß nicht weiter ausgeführt werden.

In Fig. 6 ist eine ebene Anordnung von Reflektoren aufgezeigt oder eine zylinderförmige Anordnung im Schnitt. Mit 66 ist das Sendeelement bezeichnet. Mit 67, 68 sind zwei getrennte Spiegelsegmente bezeichnet, die als Reflektor dienen. Es ist auch möglich, einen durchgehenden Spiegelreflektor 69 zu verwenden und die Bereichs- oder Sektoraufteilung 71c, 71d durch das Aufbringen geeigneter Schichten 70a bis 70c zu erzielen.

Die Anordnung gemäß Fig. 7 ermöglicht es einen besonders großen Abstrahlungswinkel α zu realisieren. Die einzelnen Reflektorsegmente 73a–73c werden durch das Sendeelement 72 beleuchtet und bewirken die dargestellte Aufteilung 74a–74c.

In Fig. 8 ist ein sphärischer Reflektor 76 dargestellt, auf welchen absorbierende Schichten 77a–77c aufgebracht sind, um die Bereichs- oder Sektoraufteilung 78a–78d zu erhalten. Mit 75 ist das Sendeelement bezeichnet.

In Fig. 9 ist eine Linsenanordnung dargestellt. Die Linse 80 wird durch das Sendeelement 79 beleuchtet, die absorbierenden Schichten 81a–81c führen zur gewünschten Bereichs- oder Sektoraufteilung 82a–82d.

Es ist auch denkbar und möglich, mehrere der beschriebenen erfindungsgemäßen Raumschutzanlagen zu einer größeren Einheit zusammenzuschalten und die Signale der einzelnen Anlagen in einer gemeinsamen Auswerteschaltung zu verarbeiten.

Durch eine spezielle Anpassung der Bereiche oder Sektoren an die geometrische Formgebung bestimmter Körper, ist es möglich die Lage und/oder die Geometrie bestimmter Körper zu ermitteln und die Ausgangssignale zur Steuerung oder Regelung einer Maschine zu verwenden.

Ferner ist es denkbar und möglich die einzelnen Bereiche oder Sektoren oder auch die Anordnung mehrerer Anlagen zu einer größeren Einheit so zu gestalten, daß die Geschwindigkeit bestimmter Körper oder Gegenstände und/oder deren Position ermittelt werden kann.

**Patentansprüche**

1. Raumschutzanlage, umfassend Sendeelemente (6, 15, 31, 32, 51, 66, 72, 75, 79), welche geeignet moduliertes oder kodiertes Licht in bestimmte Bereiche oder Sektoren (7, 18, 45, 46, 52, 71, 74, 78, 82) aussenden, wobei diese Bereiche oder Sektoren (7, 18, 45, 46, 52, 71, 74, 78, 82) durch besonders gestaltete optische Bauelemente wie etwa Linsen (80) und/oder durch die Verwendung von ein- oder mehreren sphärischen oder asphärischen Reflektoren (16, 34, 35, 69, 76) entstehen, wobei sich zwischen den erwähnten Bereichen oder Sektoren (7, 18, 45, 46, 52, 71, 74, 78, 82) Zonen (9) befinden, die nicht direkt durch die von den Sendeelementen (6, 15, 31, 32, 51, 66, 72, 75, 79) ausgesandte Strahlung beleuchtet werden und wobei die Raumschutzanlage Empfangselemente (4, 5, 12, 13, 28, 29, 48, 49) umfasst, welche die einfallende Strahlung empfangen, und eine nachgeschaltete Auswertelogik (24, 42, 62) in der Veränderungen des erzeugten Strahlungsfeldes ausgewertet werden, wobei insbesondere beim Erreichen bestimmter Schwellwerte eine Alarmauslösung erfolgt, dadurch gekennzeichnet, daß die Bereiche oder Sektoren (7, 18, 45, 46, 52, 71, 74, 78, 82) auch durch eine spezielle Ausrichtung der Sendeelemente (6, 15, 31, 32, 51, 66, 72, 75, 79) und/oder Empfangselemente (4, 5, 12, 13, 28, 29, 48, 49) gebildet werden können und durch das zusätzliche Aufbringen von absorbierenden Schichten (65, 70, 77, 81) auf das sich vor den Sendeelementen (6, 15, 31, 32, 51, 66, 72, 75, 79) und Empfangselementen (4, 5, 12, 13, 28, 29, 48, 49) befindliche Infrarotfilter (14, 30, 50) oder durch das Anbringen einer speziellen Loch- oder Schlitzmaske (20, 34a) die Bereiche oder Sektoren (7, 18, 45, 46, 52, 71, 74, 78, 82) in ihren Abmessungen festgelegt sind und daß mindestens zwei Sendeelemente (6, 15, 31, 32, 51, 66, 72, 79) und zwei Empfangselemente (4, 5, 12, 13, 28, 48, 49) vorgesehen sind und daß die in Gruppen angeordneten Sendeelemente (6, 15, 31, 32, 51, 66, 72, 75, 79) nacheinander Lichtimpulse aussenden, mit jeweils gleichartig moduliertem Licht und daß die den Empfangselementen (4, 5, 12, 13, 28, 48, 49) nachgeschalteten Auswertekanäle (21, 22, 40, 41, 60) selektiv auf das modulierte Licht reagieren und in einem bestimmten Zeittakt einer bestimmten Gruppe von Sendeelementen (6, 15, 31, 32, 51, 66, 72, 75, 79) eine ebenfalls bestimmte Gruppe von Empfangselementen (4, 5, 12, 13, 28, 29, 48, 49) zugeordnet ist und daß nacheinander bei mindestens zwei Gruppen von Empfangselementen (4, 5, 12, 13, 28, 29, 48, 49) eine unzulässige Beeinflussung des empfangenen Strahlungsfeldes bezüglich Intensität und/oder Änderungsgeschwindigkeit der Intensität und/oder Phase festgestellt werden muß, um Alarm auszulösen.

2. Raumschutzanlage nach Anspruch 1, dadurch gekennzeichnet, daß die einzelnen Gruppen von Sendeelementen (6, 15, 31, 32, 51, 66, 72, 75, 79) jeweils verschieden moduliertes oder kodiertes Licht aussenden und die in Gruppen zusammengefaßten Empfangselemente (4, 5, 12, 13, 28, 29, 48, 49) mit ihren jeweils nachgeschalteten Auswertekanälen (21, 22, 40, 41, 60) selektiv auf die Modulation oder Kodierung bestimmter Gruppen von Sendeelementen (6, 15, 31, 32, 51, 66, 72, 75, 79) ansprechen und daß in der Auswertelogik (24, 42, 62) eine unzulässige Beeinflussung von mindestens zwei der einander zugeordneten Gruppen erfolgen muß, um Alarm auszulösen.

3. Raumschutzanlage nach Anspruch 1 und Anspruch 2, dadurch gekennzeichnet, daß die einzelnen Gruppen von Sendeelementen (6, 15, 31, 32, 51, 66, 72, 75, 79) jeweils verschieden moduliertes oder kodiertes Licht aussenden und die empfangenen Signale durch die in Gruppen zusammengefaßten Empfangselemente (4, 5, 12, 13, 28, 29, 48, 49) über nur einen nachgeschalteten Auswertekanal (21, 22, 40, 41, 60), der nacheinander den einzelenen Gruppen von Empfangselementen (4, 5, 12, 13, 28, 29, 48, 49) zugeordnet wird, ausgewertet werden und in der nachgeschalteten Auswertelogik (24, 42, 62) bezüglich Alarm (25, 43, 64) oder Störung (26, 44, 63) unterschieden wird.

4. Raumschutzanlage nach den Ansprüchen 1 bis 3, dadurch gekennzeichnet, daß als Alarmkriterium eine unzulässige Veränderung des über mehrere Multiplexzyklen gemittelten empfangenen Signals verwendet wird.

5. Raumschutzanlage nach den Ansprüchen 1 bis 4, dadurch gekennzeichnet, daß mehrere der beschriebenen Raumschutzanlagen zu einer größeren Einheit zusammengeschaltet werden und die Signale in einer gemeinsamen Auswerteschaltung ausgewertet werden.

6. Raumschutzanlage nach den Ansprüchen 1 bis 5, dadurch gekennzeichnet, daß die Bereiche oder Sektoren (7, 18, 45, 46, 52, 71, 74, 78, 82), in welche die Sendeelemente (6, 15, 31, 32, 51, 66, 72, 75, 79) Lichtimpulse aussenden, der Geometrie bestimmter Körper angepaßt ist und hierdurch die Lage und/oder Geometrie der Körper festgestellt werden kann und die entsprechenden Signale zur Regelung oder Steuerung einer Maschine dienen.

7. Raumschutzanlage nach den Ansprüchen 1 bis 6, dadurch gekennzeichnet, daß die Geometrie der einzelnen Bereiche oder Sektoren (7, 18, 45, 46, 52, 71, 74, 78, 82) so gestaltet ist, daß die Geschwindigkeit von Körpern oder Gegenständen ermittelt werden kann.

**Claims**

1. A room-security system comprising the emitting elements (6, 15, 31, 32, 51, 66, 72, 75, 79) which emit suitably modulated or coded light into given regions or sectors (7, 18, 45, 46, 52, 71, 74, 78, 82), the regions or sectors (7, 18, 45, 46, 52, 71, 74, 78, 82) being produced by specially shaped optical components such as, for instance, lenses (80) and/or by the use of one or more spherical or aspherical reflectors (16, 34, 35, 69, 76) whereby between the said regions or sectors (7, 18, 45, 46, 52, 71, 74, 78, 82) there are zones (9) which are not illuminated directly by the radiation emitted by the emitting elements (6, 15, 31, 32, 51, 66, 72, 75, 79) whereby the room-security system comprises the receiving elements (4, 5, 12, 13, 28, 29, 48, 49) which receive the incident radiation, evaluating changes in the resultant radiation in the evaluation logic circuitry (24, 42, 62) and giving off an alarm in particular when certain threshold values are reached, characterized by the fact that the regions or sectors (7, 18, 45, 46, 52, 71, 74, 78, 82) can be formed by a special alignment of the emitting elements (6, 15, 31, 32, 51, 66, 72, 75, 79) and/or the receiving elements (4, 5, 12, 13, 28, 29, 48, 49) and by the application of additional absorbent layers (65, 70, 77, 81) to the infrared filter (14, 30, 50) which is present in front of the emitting elements (6, 15, 31, 32, 51, 66, 72, 75, 79) and receiving elements (4, 5, 12, 13, 28, 29, 48, 49) or by the application of a special perforated or slit mask (20, 34a) the dimensions of the regions or sectors (7, 18, 45, 46, 52, 71, 74, 78, 82) are determined and at least two emitting elements (6, 15, 31, 32, 51, 66, 72, 75, 79) and receiving elements (4, 5, 12, 13, 28, 29, 48, 49) are provided and that the emitting elements (6, 15, 31, 32, 51, 66, 72, 75, 79) arranged in groups, emit in succession light pulses with similarly modulated light, and that the evaluation channels (21, 22, 40, 41, 60) arranged behind the receiving elements (4, 5, 12, 13, 28, 29, 48, 49) react selectively to the modulated light and that also a given group of receiving elements (4, 5, 12, 13, 28, 29, 48, 49) is associated in a given time cycle with another given group of receiving elements (4, 5, 12, 13, 28, 29, 48, 49) and that an impermissible influencing with respect to intensity and/or rate of change of the intensity and/or rate of the light received must be noted in succession at at least two groups of receiving elements (4, 5, 12, 13, 28, 29, 48, 49) in order for the alarm to be given.

2. A room-security system according to claim 1, characterized by the fact the individual groups of emitting elements (6, 15, 31, 32, 51, 66, 72, 75, 79) emit in each case differently modulated or coded light and that the receiving elements (4, 5, 12, 13, 28, 29, 48, 49), arranged in groups with their evaluation channels (21, 22, 40, 41, 60), arranged in each case behind them, react selectively to the modulation or code of certain groups of emitting elements (6, 15, 31, 32, 51, 66, 72, 75, 79) and that an impermissible influencing of at least two of the groups corresponding to each other must be noted in the evaluation logic (24, 42, 62) in order for the alarm to be given.

3. A room-security system according to claim 1 and claim 2, characterized by the fact the individual groups of emitting elements (6, 15, 31, 32, 51, 66, 72, 75, 79) emit in each case differently modulated or coded light and that the signals of the receiving elements (4, 5, 12, 13, 28, 29, 48, 49), arranged in groups, are evaluated over only one evaluation channel (21, 22, 40, 41, 60) which is associated in succession with the individual groups of receiving elements (4, 5, 12, 13, 28, 29, 48, 49), and differentiation between alarm (25, 43, 64) and disturbance (26, 44, 63) is effected in the following evaluation logic (24, 42, 62).

4. A room-security system according to claims 1 through 3, characterized by the fact that an inadmissible modification of the received signal, averaged by a plurality of Multiplex cycles is used as alarm criterion.

5. A room-security system according to claims 1 through 4, characterized by the fact that a plurality of the described room-security systems are combined into a larger unit and that the signals are evaluated in a common evaluation circuit.

6. A room-security system according to claims 1 through 5, characterized by the fact that the regions or sectors (7, 18, 45, 46, 52, 71, 74, 78, 82) into which the emitting elements (6, 15, 31, 32, 51, 66, 72, 75, 79) emit light pulses are adapted to the geometry of certain bodies and in this way the position and/or geometry of the bodies can be noted and the corresponding signals serve for the further regulating or control of a machine.

7. A room-security system according to claims 1 through 6, characterized by the fact that the geometry of the individual regions or sectors (7, 18, 45, 46, 52, 71, 74, 78, 82) is such that the speed of bodies or objects can be determined.

**Revendications**

1. Dispositif d'alarme détecteur d'intrus comprenant d'une part des éléments émetteurs (6, 15, 31, 32, 51, 66, 72, 79) émettant de la lumière modulée ou codée de façon adaptée dans la direction de certaines parties ou secteurs (7, 18, 45, 46, 52, 71, 74, 78, 82), ces parties ou secteurs (7, 18, 45, 46, 52, 71, 74, 78, 82), étant délimités par des éléments optiques spéciaux telles que des lentilles (80) et/ou par l'application d'un ou de plusieurs réflecteurs sphériques ou non-sphériques (16, 34, 35, 69, 76), entre lesdites parties ou secteurs (7, 18, 45, 46, 52, 71, 74, 78, 82), se trouvant des zones (9) qui ne sont pas illuminés directement par le rayonnement émis par les éléments émetteurs (6, 15, 31, 32, 51, 66, 72, 75, 79) et comprenant d'autre part des éléments récepteurs (4, 5, 12, 13, 28, 29, 48, 49) qui reçoivent le rayonnement incident, ainsi qu'une logique d'évaluation (24, 42, 62) intercalée à la suite des éléments récepteurs (4, 5, 12, 13, 28, 29, 48, 49) et interprétant les modifications du champs de rayonnement provoquées de sorte qu'un alarme soit déclanché dès qu'une certaine valeur-seuil est atteinte, caractérisé en ce que les parties ou secteurs (7, 18, 45, 46, 52, 71, 74, 78, 82), peuvent aussi être créés par une orientation particulière des éléments émetteurs (6, 15, 31, 32, 51, 66, 72, 75, 79) et/ou des éléments récepteurs (4, 5, 12, 13, 28, 29, 48, 49) et que les dimensions de ces parties ou secteurs (7, 18, 45, 46, 52, 71, 74, 78, 82), sont fixés grâce à l'addition supplémentaire de couches absorbantes (65, 70, 77, 81) au filtre infrarouge (14, 30, 50) placé devant les éléments émetteurs (6, 15, 31, 32, 51, 66, 72, 75, 79) et les éléments récepteurs (4, 5, 12, 13, 28, 29, 48, 49) ou bien par l'addition d'un diaphragme spécial (20, 34a) à trous ou fentes, ainsi qu'au moins deux éléments émetteurs (6, 15, 31, 32, 51, 66, 72, 75, 79) ou deux éléments récepteurs (4, 5, 12, 13, 28, 29, 48, 49) sont prévus, ainsi que les éléments émetteurs (6, 15, 31, 32, 51, 66, 72, 75, 79) disposés par groupes émettent l'un après l'autre des impulsions de lumière dont la lumière est toujours modulée de la même façon, ainsi que les canaux d'évaluation (21, 22, 40, 41, 60) intercalés à la suite des éléments récepteurs (4, 5, 12, 13, 28, 29, 48, 49) réagissent de manière sélective à la lumière modulée et qu'un certain groupe d'éléments émetteurs (6, 15, 31, 32, 51, 66, 72, 75, 79) est synchronisé avec un certain groupe d'éléments récepteurs (4, 5, 12, 13, 28, 29, 48, 49) par une séquence définie, ainsi qu'une influence inadmissible du champ de rayonnement reçu, relative à l'intensité et/ou à la vitesse de modification de l'intensité et/ou de la phase doit être constatée successivement par au moins deux groupes d'éléments récepteurs (4, 5, 12, 13, 28, 29, 48, 49) pour que l'alarme soit déclenché.

2. Dispositif d'alarme détecteur d'intrus suivant la revendication 1, caractérisé en ce que les différents groupes d'éléments émetteurs (6, 15, 31, 32, 51, 66, 72, 75, 79) émettent chacun de la lumière modulée ou codée de façon différente et que les éléments récepteurs (4, 5, 12, 13, 28, 29, 48, 49) réunis par groupes réagissent avec leurs canaux d'évaluation (21, 22, 40, 41, 60) intercalés à la suite de chaque élément récepteur (4, 5, 12, 13, 28, 29, 48, 49) de façon séléctive à la modulation ou codification de groupes définis d'éléments emetteurs (6, 15, 31, 32, 51, 66, 72, 75, 79) et que l'alarme est seulement déclanché dès qu'une influence inadmissible d'au moins deux des groupes répondant l'un à l'autre est constatée par la logique d'évaluation (24, 42, 62).

3. Dispositif d'alarme détecteur d'intrus suivant les revendications 1 et 2, caractérisé en ce que les différents groupes d'éléments émetteurs (6, 15, 31, 32, 51, 66, 72, 75, 79) émettent chacun de la lumière modulée ou codée de façon différente et que les signaux reçus sont évalués uniquement par un seul canal d'évaluation (21, 22, 40, 41, 60) intercalé à la suite des éléments récepteurs (4, 5, 12, 13, 28, 29, 48, 49) réunis par groupes, ce canal étant consécutivement accordé aux différents groupes d'éléments récepteurs (4, 5, 12, 13, 28, 29, 48, 49) et que la différence entre un alarme (25, 43, 64) ou un dérangement (26, 44, 63) est constatée par la logique d'évaluation (24, 42, 62) branchée à l'issu du canal.

4. Dispositif d'alarme détecteur d'intrus suivant les revendications 1 à 3, caractérisé en ce qu'une modification inadmissible du signal reçu qui est obtenu comme moyenne de plusieurs cycles de multiplexage est utilisé comme critère d'alarme.

5. Dispositif d'alarme détecteur d'intrus suivant les revendications 1 à 4, caractérisé en ce que plusieurs dispositifs d'alarme détecteur d'intrus tels que décrites ci-dessus, sont réunies en un bloc plus important et que les signaux sont évalués dans une unité d'évaluation commune.

6. Dispositif d'alarme détecteur d'intrus suivant les revendications 1 à 5, caractérisé en ce que les parties ou secteurs (7, 18, 45, 46, 52, 71, 74, 78, 82), dans lesquels les éléments emetteurs (6, 15, 31, 32, 51, 66, 72, 75, 79) émettent des impulsions de lumière, répondent à la géométrie de certains corps définis, et qu'ainsi la position et/ou la géométrie desdits corps peut être déterminée et que les signaux correspondants servent à règler ou contrôler une machine.

7. Dispositif d'alarme détecteur d'intrus suivant les revendications 1 à 6, caractérisé en ce que la géometrie des parties ou secteurs (7, 18, 45, 46, 52, 71, 74, 78, 82) est choisie de sorte que la vitesse des corps ou objets peut être déterminée.

Fig.1

Fig.2

Fig.3

Fig. 4

EP 0 188 748 B1

Fig. 5

71a

71b

66

71c

71d

67

68

70a
70b
70c

69

_Fig.6_

74a

73c

74b

72

73b

73a

74c

_Fig.7_

78a

78b

75

78c

78d

76

77a

77b

77c

_Fig. 8_

80

79

82a

81a

82b

81b

82c

81c

82d

_Fig.9_